(19) Europäisches Patentamt
European Patent Office
Office européen des brevets

(11) EP 2 265 070 A1

(12) **EUROPEAN PATENT APPLICATION**

(43) Date of publication:
**22.12.2010 Bulletin 2010/51**

(51) Int Cl.:
***H04W 72/04*** *(2009.01)*

(21) Application number: **10166353.2**

(22) Date of filing: **17.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **19.06.2009 US 218614 P**
**06.07.2009 US 223274 P**
**14.07.2009 US 225365 P**
**17.09.2009 US 561726**

(71) Applicant: **Samsung Electronics Co., Ltd.**
**Suwon-si,**
**Gyeonggi-do 442-742 (KR)**

(72) Inventors:
- **You, Hwa-Sun**
  **Gyeonggi-do (KR)**
- **Kang, Hee-Won**
  **Gyeonggi-do (KR)**

(74) Representative: **Jenkins, Richard Gavin**
**Harrison Goddard Foote**
**106 Micklegate**
**York YO1 6JX (GB)**

(54) **Method and apparatus for transmitting and receiving uplink bandwidth request information in wireless communication system**

(57) Methods and apparatus are provided for requesting uplink Bandwidth (BW) over a BW Request (REQ) channel in an Orthogonal Frequency Division Multiple Access (OFDMA) communication system. A BW REQ indicator is transmitted with a BW REQ message over the BW REQ channel from a Mobile Station (MS) to a Base Station (BS) to request an uplink resource for uplink traffic of a delay sensitive service. A grant of the requested uplink resource is received from the BS in accordance with the transmitted BW REQ indicator and the BW REQ message. The uplink traffic is transmitted from the MS to the BS using the granted uplink resource.

Base station
Mobile station
BW request message
202
UL grant
204
UL scheduled transmission
with optional piggybacked BW request
206

FIG.2

EP 2 265 070 A1

## Description

## BACKGROUND OF THE INVENTION

### 1. Field of the Invention

The present invention relates generally to a Bandwidth (BW) Request (REQ) channel in an Orthogonal Frequency Division Multiple Access (OFDMA) communication system, and more particularly, although not exclusively, to transmission, reception and modulation methods of a BW REQ channel used by a Mobile Station (MS) to request an uplink BW from a Base Station (BS).

### 2. Description of the Related Art

Conventional OFDMA systems utilize a multiple access scheme in which the BS schedules and allocates time/frequency/space resources to multiple MSs using a scheduler. When using the multiple access scheme, it is necessary for the BS scheduler to strictly manage the resources in order to prevent a collision of resources in the OFDMA channel. When an MS generates uplink traffic for transmission to the BS, the MS is first required to request that the BS allocate bandwidth resources for the transmission of the uplink traffic. When an MS has not yet been allocated an uplink resource when a request is required to be made, a resource that is accessible by every MS is typically used to request the uplink bandwidth.

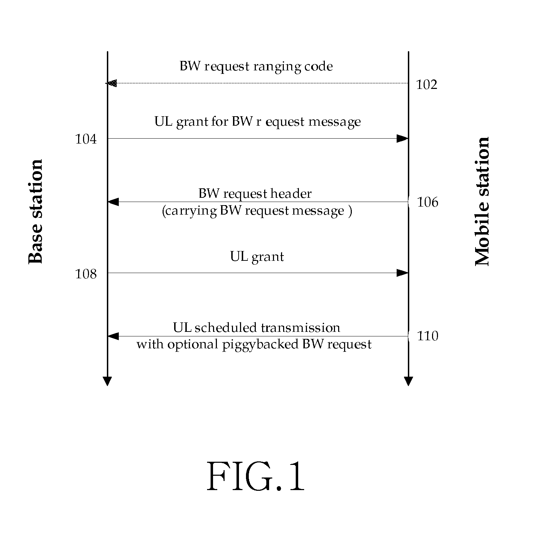

An example of a BW REQ signaling procedure in an IEEE 802.16e system is illustrated in FIG. 1. The procedure begins at step 102, in which the MS randomly selects one of a plurality of BW REQ ranging codes, and transmits the selected ranging code to the BS using the time/frequency/space resource previously allocated to the BW REQ channel or the resource accessible by every MS. In step 104, the BS detects the transmission of the BW REQ ranging code, and determines whether the transmitted BW REQ ranging code is one of the BW REQ ranging codes that are transferable in the BW REQ channel. Upon a positive determination of the BW REQ ranging code, the BS allocates an uplink resource of a predefined size to the MS based on a broadcast identifier (ID). The size of the allocated uplink resource is pre-defined between the BS and the MS according to the BW REQ ranging code.

In step 106, when the uplink resource is allocated by the BS in response to the BW REQ ranging code, the MS transmits BW REQ information including a corresponding MS-ID, or alternatively a Connection or Station ID (CID or SID), and a requested uplink resource corresponding to a bandwidth required to deliver the uplink traffic in a BW REQ message. The BW REQ message is transmitted according to a designated format, such as a BW REQ header. Accordingly, it is necessary for the uplink resource allocated in step 104 to have a pre-defined size capable of delivering the designated format.

In step 108, the BS acquires the BW REQ message, including the MS-ID (or the CID or SID) and the requested uplink resource by decoding the BW REQ header. The BS reflects the BW REQ information in an uplink scheduler and grants another uplink resource to the MS in accordance with a size requested by the MS at a point in time permitted by the scheduler.

In step 110, when the uplink resource is granted, the MS transmits the uplink traffic that was stored in a queue of the MS. When additional uplink resources are required, the MS can piggyback BW REQ message to the allocated resource without having to repeat the BW REQ signaling procedure from step 102.

The conventional BW REQ signaling procedure described above requires five steps of signaling between the MS and the BS, and is commonly referred to as the five-step BW REQ signaling procedure. Each signaling step requires encoding/decoding and contention resolution, thereby requiring more than one frame. Thus, it is difficult for the five-step BW REQ signaling procedure to support delay sensitive Real-Time (RT) services, which require transmission as soon as possible after the uplink traffic is generated.

## SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Certain embodiments of the present invention have been made to address at least the above problems and/or disadvantages and to provide at least the advantages described below. Accordingly, an aspect of the present invention provides methods and apparatus for requesting and allocating uplink BW over a BW REQ channel in an OFDMA communication system.

According to one aspect of the present invention, a method is provided for requesting uplink Bandwidth (BW) over a BW Request (REQ) channel in an Orthogonal Frequency Division Multiple Access (OFDMA) communication system. A BW REQ indicator is transmitted with a BW REQ message over the BW REQ channel from a Mobile Station (MS) to a Base Station (BS) to request an uplink resource for uplink traffic of a delay sensitive service. A grant of the requested uplink resource is received from the BS in accordance with the transmitted BW REQ indicator and the BW REQ message. The uplink traffic is transmitted from the MS to the BS using the granted uplink resource.

According to another aspect of the present invention, a method is provided for allocating uplink Bandwidth (BW) over a BW Request (REQ) channel in an Orthogonal Frequency Division Multiple Access (OFDMA) communication system. It is determined whether a BW REQ indicator with a BW REQ message are received at a Base Station (BS) from a Mobile Station (MS) over the BW REQ channel as a request for an uplink resource for uplink traffic of a delay sensitive service. The requested uplink resource is allocated in accordance with the received BW REQ indicator and the BW REQ message. The uplink traffic is received at the BS from the MS using the allocated uplink resource.

According to an additional aspect of the present invention, a Mobile Station (MS) is provided for requesting uplink Bandwidth (BW) over a BW Request (REQ) channel in an Orthogonal Frequency Division Multiple Access (OFDMA) communication system. The MS includes a transmitter for transmitting a BW REQ indicator with a BW REQ message over the BW REQ channel to a Base Station (BS) to request an uplink resource for uplink traffic of a delay sensitive service, and transmitting the uplink traffic to the BS using a granted uplink resource. The MS also includes a receiver for receiving a grant of the requested uplink resource from the BS in accordance with the BW REQ indicator and the BW REQ message.

According to a further aspect of the present invention, a Base Station (BS) is provided for allocating uplink Bandwidth (BW) over a BW Request (REQ) channel in an Orthogonal Frequency Division Multiple Access (OFDMA) communication system. The BS includes receiver for receiving a BW REQ indicator and a BW REQ message from a Mobile Station (MS) over the BW REQ channel as a request for an uplink resource for uplink traffic of a delay sensitive service, and receiving uplink traffic from the MS using an allocated uplink resource. The BS also includes a processor for determining whether the BW REQ indicator with the BW REQ message is properly received from the MS. The BS further includes an allocator for allocating the requested uplink resource in accordance with the BW REQ indicator and the BW REQ message.

Another aspect of the invention provides a computer program comprising instructions arranged, when executed, to implement a method and/or apparatus in accordance with any one of the above-described aspects. A further aspect provides machine-readable storage storing such a program.

## BRIEF DESCRIPTION OF THE DRAWINGS

The above and other aspects, features and advantages of embodiments of the present invention will be more apparent from the following description when taken in conjunction with the accompanying drawings, in which:

FIG. 1 is a diagram illustrating a five-step BW REQ signaling procedure in an IEEE 802.16e system;

FIG. 2 is a diagram illustrating a three-step BW REQ signaling procedure, according to an embodiment of the present invention;

FIG. 3 is a diagram illustrating a combined three-step and five-step BW REQ signaling procedure, according to an embodiment of the present invention;

FIG. 4 is a diagram illustrating the physical structure of a BW REQ channel supporting the combined three-step and five-step BW REQ signaling procedure, according to an embodiment of the present invention;

FIG. 5 is a diagram illustrating the operation process of an MS in a broadband wireless communication system, according to an embodiment of the present invention;

FIG. 6 is a diagram illustrating operations of a BS in a broadband wireless communication system, according to an embodiment of the present invention; and

FIG. 7 is a block diagram of an MS and a BS in a broadband wireless communication system, according to an embodiment of the present invention.

## DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

The terms and words used in the following description and claims are not limited to their dictionary meanings, but are merely used to enable a clear and consistent understanding of the invention. Accordingly, it should be apparent to those skilled in the art that the following description of embodiments of the present invention are provided for illustrative purposes only and not for the purpose of limiting the invention, as defined by the appended claims and their equivalents.

It is to be understood that the singular forms "a," "an," and "the" include plural referents unless the context clearly dictates otherwise. Thus, for example, reference to "an identifier" includes reference to one or more of such identifiers.

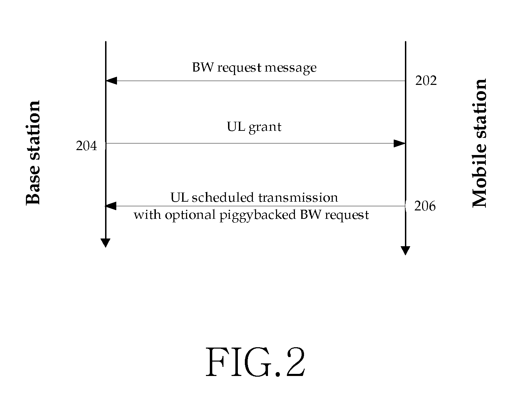

In order to properly support delay sensitive Real-Time (RT) services, the latency of the five-step BW REQ signaling procedure needs to be reduced. Latency reduction can be achieved through a reduction of the number of steps involved in the BW REQ signaling procedure. FIG. 2 is a diagram illustrating a three-step BW REQ signaling procedure, according to an embodiment of the present invention.

The procedure of FIG. 2 begins at step 202, where the MS transmits at least a portion of the BW REQ information through the BW REQ channel as a BW REQ message using a predefined format. The BW REQ information relates to an MS-ID (or CID or SID), a type of uplink traffic for transmission, and a requested uplink resource relating to bandwidth size.

In step 204, the BS decodes the BW REQ message. When a contention does not occur between BW REQ messages of multiple MSs, the BS acquires the MS-ID (or CID or SID) and the size of the requested uplink resource using information decoded from the BW REQ message. The BS reflects this information in the uplink scheduler and grants an uplink resource in accordance with a size requested by the MS at a point in time permitted by the scheduler. In reflecting the information, the BS transmits information decoded from the BW REQ message to the uplink scheduler. Accordingly, the uplink scheduler grants an uplink resource to the MS.

In step 206, when the uplink resource is granted, the MS transmits uplink traffic that was stored in a queue of the MS. When additional uplink resources are required, the MS can piggyback the BW REQ information to the allocated resource without having to repeat the procedure from step 202.

Compared to the conventional five-step BW REQ signaling procedure, the above-described three-step signaling procedure is more efficient in supporting a delay sensitive RT service. However, the BS in the three-step signaling procedure cannot decode BW REQ messages when multiple MSs concurrently send a BW REQ message. The five-step signaling procedure is capable of processing all BW REQ information of multiple MSs within one BW REQ channel unless the multiple MSs select the same BW REQ ranging code. When employing multiple receive antennas in conjunction with the three-step signaling procedure, the BS is able to decode multiple BW REQ messages using a MIMO channel technique. However, since the maximum number of the decodable messages is limited to the number of receive antennas of the BS, the contention probability still remains greater than the five-step BW REQ signaling procedure and considerably increases decoder complexity in the BS.

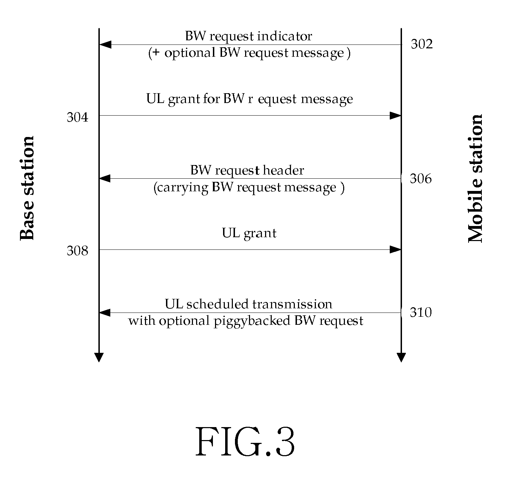

Referring now to FIG. 3, a diagram illustrates a combined three-step and five-step BW REQ signaling procedure, according to an embodiment of the present invention. The combined signaling procedure provides the advantages of both BW REQ signaling procedures. The contention probability is lowered due to the fact that MSs attempt the three-step BW REQ signaling procedure for delay sensitive services, such as RT services, and attempt the five-step BW REQ signaling procedure for non-delay-sensitive services, such as Non Real-Time (NRT) services. RT services include Voice over Internet Protocol (VoIP) packets, time-urgent packets like streaming video, and an Acknowledgement for Transmission Control Protocol (TCP ACK) in the RT services. Services other than the RT services may be referred to the NRT services, such as Best Effort (BE), for example.

The procedure of FIG. 3 begins at step 302, in which the BW REQ channel is divided into two regions for delivering a BW REQ indicator and a BW REQ message. The MS selects one of the plurality of BW REQ ranging codes and transmits the selected ranging code as the BW REQ indicator. The BW REQ indicator may be referred as a BW REQ preamble. If the service of the uplink traffic for which the MS is requesting transmission is an RT service, or a service type pre-classified as a delay sensitive service, the BW REQ message is transmitted with the BW REQ indicator in a predefined format. Specifically, at least a portion of information relating to an MS-ID (or Connection or Station ID), a type of uplink traffic for transmission, and a requested uplink resource relating to a size of the bandwidth are transmitted together over the region allocated for the BW REQ message. If the uplink traffic is an NRT service, such as BE, only the BW REQ indicator is transmitted. The BW REQ message may be referred as a quick access message.

In step 304, the BS detects reception of the BW REQ ranging code transmitted in the BW REQ indicator region of the BW REQ channel, and examines whether the transmitted ranging code is one of the plurality of ranging codes that may be transmitted in the BW REQ channel. When reception of a particular BW REQ ranging code is detected, the BS attempts to decode a corresponding BW REQ message. When the BW REQ ranging code is detected without reception of the BW REQ message, the BS allocates and grants an uplink resource of a pre-defined size for carrying a BW REQ header with respect to the received ranging code and through a broadcast ID. A similar allocation is provided when it is determined that the signal quality of a received BW REQ message is not sufficiently high enough to directly grant uplink traffic through the three-step BW REQ signaling procedure. For example, the signal quality can be determined based on Cyclic Redundancy Check (CRC), power measurement in the channel, Log Likelihood Ratio (LLR) measurement, and channel quality measurement. Although it is not illustrated in FIG. 3, the BS can transmit a message informing of which indicators are detected.

If both the BW REQ indicator and the BW REQ message are received at the BS and it is determined that the BW REQ message has a sufficiently high signal quality, the BS directly reflects the resource requested by the MS in the BW REQ message in the uplink scheduler, thereby eliminating a need to allocate and grant an uplink resource for the BW REQ header and proceeding from step 302 directly to step 308 in FIG. 3.

If the uplink resource is allocated in step 304 in accordance with the BW REQ ranging code, the MS transmits the BW REQ header having BW REQ message that includes BW REQ information such as the MS-ID (or Connection or Station ID) and the requested uplink resource corresponding to a bandwidth required for the delivery of the uplink traffic, according to a defined format. The BW REQ header may also be generated and transmitted by the MS in situations in which the uplink traffic of the MS is for an RT service and the MS transmits both of the BW REQ indicator and the BW REQ message in step 302, when the BS determines that the signal quality of the BW REQ message is not sufficiently high enough.

In step 308, by decoding the BW REQ header or decoding the BW REQ message, the BS acquires the MS-ID (or CID or SID) and the requested uplink resource. The BS reflects this information in the uplink scheduler and grants an uplink resource having a size requested by the MS at a point in time permitted by the scheduler.

In step 310, when the uplink resource is granted, the MS transmits the uplink traffic that was stored in a queue of the MS. When additional uplink resources are required, the MS can piggyback the BW REQ information to the allocated resource without having to repeat the procedure from step 302.

According to the procedure described above, all five steps are performed when the MS attempts a BW REQ for an NRT service, whereas it is also possible that the requested uplink resource is granted only using steps 302, 308 and 310 when the MS attempts a BW REQ for a delay sensitive service, such as an RT service.

The MS may also attempt the three-step BW REQ signaling procedure regardless of service types. In such an embodiment, after a trial of the three-step BW REQ signaling procedure, the MS performs the five-step BW REQ signaling procedure as a fallback, if the BS fails to decode a BW REQ message.

For the three-step BW REQ signaling procedure, the MS is required to transmit at least the MS-ID and the requested uplink resource (or Quality of Service (QoS) related information) over the BW REQ channel. Specifically, a 12-bit station ID [$s_0$, $s_1$, $s_2$, $s_3$,..., $s_{10}$, $s_{11}$] and a pre-defined BW REQ size of 3-4 bits (or QoS identifier) [$q_0$, $q_1$, $q_2$, ($q_3$)] are assumed. Herein, the pre-defined BW REQ size denotes a value or an index indicating amount of uplink resource which is negotiated between an MS and a BS when a corresponding call is set. Herein, $s_0$ and $q_0$ denote the Station ID and the first Most Significant Bit (MSB) of the predefined BW REQ size, respectively. The BW REQ size is defined and limited based on the delay sensitive BW REQ type, such as a time-urgent MAC management message, a VoIP packet, Video streaming, and an TCP ACK.

Before mapping the 12-bit Station ID and the pre-defined BW REQ size to the BW REQ channel, the BW REQ information of 15 bits (or 16 bits) are generated. When the BW REQ information is expressed as [$b_0$, $b_1$, $b_2$, ..., $b_{13}$, $b_{14}$, ($b_{15}$)], it may be generated as shown in Equation (1) below.

$$[b_0, b_1, b_2, \ldots, b_{13}, b_{14}] = [s_0, s_1, s_2, \ldots, s_8, s_9, q_0, q_1, q_2, s_{10}, s_{11}] \qquad \ldots(1)$$

When the predefined BW REQ size is constituted with 4 bits, the BW REQ information is generated as shown in Equation (2) below.

$$[b_0, b_1, b_2, \ldots, b_{13}, b_{14}, b_{15}] = [s_0, s_1, s_2, \ldots, s_7, s_8, q_0, q_1, q_2, q_3, s_9, s_{10}, s_{11}] \qquad \ldots(2)$$

When the BW REQ information is generated through a reordering of the Station ID and the predefined BW REQ size, the BW REQ indicator part and the BW REQ message part can be evenly divided in the transmission of the BW REQ channel. Thus, when MSs having the same Least Significant Bit (LSB), Station ID or requested uplink resource attempt a BW REQ at the same time, the contention probability is reduced.

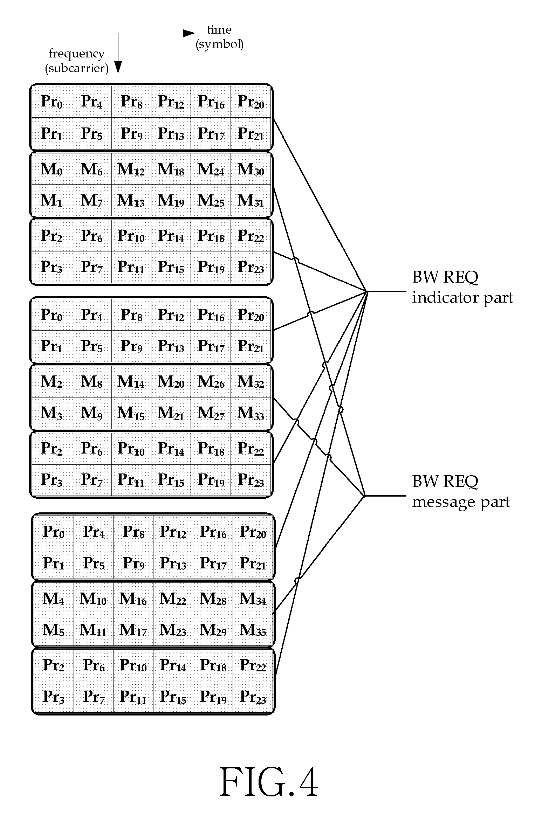

Referring now to FIG. 4, a diagram illustrates the physical structure of a BW REQ channel supporting the combined three-step and five-step BW REQ signaling procedure, according to an embodiment of the present invention. It is to be understood that the following details are for purposes of explanation only, and other variations may be employed without departing from the scope of the present invention.

The BW REQ channel includes three BW REQ tiles that include six adjacent subcarriers of six symbols each. Each BW REQ tile is extracted to be distributed uniformly throughout the whole band for frequency diversity. Each BW REQ tile is subdivided into three subtiles, each of which include two adjacent subcarriers of six symbols. The subtiles at each end of the BW REQ tile are used to carry the BW REQ indicator, while the middle subtile in each BW REQ tile is used to carry the BW REQ message. Thus, character 'M' denotes Message, and character 'Pr' denotes Preamble (or indicator).

In accordance with the physical structure of the BW REQ channel illustrated in FIG. 4, the BW REQ indicator is determined as one of 24 orthogonal sequence indices (0-23), and the BW REQ message can carry 12-bit BW REQ information bits using Quadrature Phase Shift Keying (QPSK) modulation and channel coding of 1/6 code rate.

A Cyclic Redundancy Check (CRC) may be utilized in order to increase the reliability of the BW REQ message and reduce false message detection, which can cause confusion between the three-step procedure and the five-step procedure.

For 6-bit CRC, a (x^6 + x + 1) polynomial is used. The BW REQ message may carry 18 bits, which include 12-bit BW REQ information and 6-bit CRC using channel coding of 1/4 code rate.

For 5-bit CRC, a (x^5 + x^4 + x^2 + 1) polynomial is used. The BW REQ message may carry 16 bits, which include 11-bit BW REQ information and 5-bit CRC using channel coding of 1/4 code rate.

For 3-bit CRC, a (x^3 + x + 1) polynomial is used. The BW REQ message may carry 15 bits, which include 12-bit BW REQ information and 3-bit CRC using channel coding of 1/5 code rate.

In one embodiment of the present invention, a mapping method for transmitting the 16-bit BW REQ information bits $[b_0, b_1, b_2, ..., b_{13}, b_{14}, b_{15}]$ in the physical structure as illutstrated in FIG. 4 is provided. 12 bits of $[b_0, b_1, b_2, ...,b_{10}, b_{11}]$ are carried by the BW REQ message. The last 4 bits $[b_{12}, b_{13}, b_{14}, b_{15}]$ are converted into a decimal number and used to select the orthogonal sequence index of the BW REQ indicator. The BS detects and reassembles the BW REQ indicator and the BW REQ message respectively, and thus reconstructs the BW REQ information bits.

In the above-described embodiment of the present invention, an MS attempting the three-step signaling procedure can only select an orthogonal sequence index between 0 and 15 as the BW REQ indicator due to the limit of 4 bits. Accordingly, the contention probability between MSs attempting the three-step signaling procedure is increased. This limited orthogonal sequence index selection also increases the contention probability due to the fact that the orthogonal sequence index cannot be kept constant with respect to an MS attempting the five-step BW REQ signaling procedure, which selects an orthogonal sequence index between 0 and 23.

Problems may arise in the three-step BW REQ signaling procedure when the BS errs in detecting the BW REQ information, or when the MS attempts the five-step BW REQ signaling procedure, transmits only the BW REQ indicator, and the BS construes the transmission as the three-step BW REQ signaling procedure due to a false alarm detection error in the BW REQ message. When an error occurs, a resource is allocated to an MS that did not yet request an uplink resource. As a result, a decrease in system capacity caused by the waste of the resources may become an issue. In the above-mentioned embodiment of the present invention, when either the BW REQ indicator or the BW REQ message triggers false alarm detection or when the decoding error occurs, system capacity may become reduced.

In another embodiment of the present invention, which solves the problems described above, it is assumed that the BW REQ information has 15 bits in the form of $[b_0, b_1, b_2, ..., b_{12}, b_{13}, b_{14}]$. The MSB 12 bits $[b_0, b_1, b_2, ...,b_{10}, b_{11}]$ of the BW REQ information bits are carried by the BW REQ message. The orthogonal sequence index of the BW REQ indicator is selected from the LSB 3 bits $[b_{12}, b_{13}, b_{14}]$ and the MSB of the BW REQ information bits in accordance with Equation (3) below.

$$\text{orthogonal sequence index} = \mathrm{dec}([b_{12}b_{13}b_{14}]) + 8 * \mathrm{mod}(\mathrm{dec}([b_{12}b_{13}b_{14}]) + \mathrm{dec}([b_0b_1b_2]), 3) \quad \ldots(3)$$

Here, dec([]) denotes the conversion of a binary number to a decimal number, and mod(A, B) denotes a remainder of a division of A by B. When the last term $\mathrm{dec}([b_0b_1b_2])$ in the above equation is replaced by an arbitrary 3 bits of the BW REQ information bits carried by the BW REQ message, the effect of the equation can be sustained.

The BS detects the BW REQ indicator and the BW REQ message respectively. If the BW REQ message includes the CRC, the BS checks whether the CRC from BW REQ information bits matches the received CRC. Based on the detected BW REQ indicator and BW REQ message, the BS determines whether the mapping relation of Equation (3) matches. When the CRC or the mapping relation is not matched, the BS determines that the decoding of the BW REQ message is not sufficiently reliable or that the five-step BW REQ signaling procedure is attempted and the BW REQ message was not transmitted at all, and the BS proceeds to step 304 of FIG. 3. When the mapping relation is satisfied, the BS reconstructs the BW REQ information bits and proceeds to step 308 of FIG. 3 according to the three-step BW REQ signaling procedure.

In an additional embodiment of the present invention, 16-bit BW REQ information bits are in the form of $[b_0, b_1, b_2, ..., b_{12}, b_{13}, b_{14}, b_{15}]$. While the steps are substantially identical to the immediately preceding embodiment, Equation (3) can be substituted with Equation (4) below.

$$\text{orthogonal sequence index} = \mathrm{dec}([b_{12}b_{13}b_{14}b_{15}]) + 8 * \mathrm{mod}(\mathrm{dec}([b_{12}b_{13}b_{14}b_{15}]) + \mathrm{dec}([b_0b_1b_2b_3]), 3) \quad \ldots(4)$$

When the last term $\mathrm{dec}([b_0b_1b_2b_3])$ in the above equation is replaced by an arbitrary 4 bits of the BW REQ information bits carried by the BW REQ message, the same effect can be sustained.

In a further embodiment of the present invention, 15-bit BW REQ information bits are in the form of $[b_0, b_1, b_2, ..., b_{12}, b_{13}, b_{14}]$. While the steps are substantially identical to the two immediately preceding embodiments, Equation (3) can be substituted with Equation (5) below.

$$\text{orthogonal sequence index} = \mathrm{dec}([b_{12}b_{13}b_{14}]) + 8 * \mathrm{mod}(\mathrm{dec}([b_{12}b_{13}b_{14}]) + \mathrm{dec}([p_0p_1p_2]), 3) \quad \ldots(5)$$

$p_0$, $p_1$, $p_2$ are defined based on Equation (6) below.

$$p_0 = \mathrm{mod}(b_0+b_1+b_2+b_3, 2),$$
$$p_1 = \mathrm{mod}(b_4+b_5+b_6+b_7, 2),$$
$$p_2 = \mathrm{mod}(b_8+b_9+b_{10}+b_{11}, 2) \quad \ldots(6)$$

In yet another embodiment of the present invention, another mapping rule is provided for 15-bit BW REQ information bits in the form of $[b_0, b_1, b_2, ..., b_{12}, b_{13}, b_{14}]$. While the steps are substantially identical to the above embodiments, Equation (3) can be substituted with Equation (7) below.

$$\text{Orthogonal sequence index} = \mathrm{dec}(b_{12}b_{13}b_{14}) + 8 * \mathrm{mod}\left(\sum_{i=0}^{K} \mathrm{dec}(b_{3i}b_{3i+1}b_{3i+2}), 3\right) \quad \ldots(7)$$

In Equation (7), the range of K is from 0 to 4. When K=0, Equation (7) is equal to Equation (3). When K=4, Equation (7) is equal to Equation (5). i is an integer.

In yet a further embodiment of the present invention, another mapping rule is provided for M-bit BW REQ information bits in the form of $[b_0, b_1, b_2, ..., b_{M-1}]$. While the steps are substantially identical to the above embodiments, Equation (3) can be substituted with Equation (8) below.

$$\text{Orthogonal sequence index} = \mathrm{mod}\left\{ \begin{matrix} f(t, b_0, b_1, \ldots, b_{M-1}) + \mathrm{dec}(b_{M-3}b_{M-2}b_{M-1}) \\ + 8 * \mathrm{mod}\left(\sum_{i=0}^{K} r_i, 3\right) \end{matrix}, \quad 24 \right\} \quad \ldots(8)$$

In Equation (8), $r_i$ is $dec(b_{3i}b_{3i+j}b_{3i+2})$, $t$ is a superframe index or a frame index, and $f(t, b_0, b_1, ..., b_{M-1})$ is a function related to $t$ and $b_0, b_1, ..., b_{M-1}$. $f(t, b_0, b_1, ..., b_{M-1})$ enables two MSs to reselect different sequences when the MSs fail to gain access to the three-step signaling procedure and the five-step signaling procedure by selecting the same orthogonal sequence index. For example, $f(t, b_0, b_1, ..., b_{M-1})$ can be expressed as $t * \lfloor dec(b_0 b_1 b_2 ... b_{L-1}) / 24 \rfloor$ Variable L is less than or equal to variable M ($L<=M$). $f(t,b_0,b_1, ..., b_{M-1})$ can be expressed in numerous ways to allow different MSs to select different orthogonal sequence indices at every frame or superframe.

In an additional embodiment of the present invention, another mapping rule is provided for M-bit BW REQ information bits in the form of $[b_0, b_1, b_2, ..., b_{M-1}]$. While the steps are substantially identical to the above embodiments, Equation (3) can be substituted with Equation (9) below.

$$\text{Orthogonal sequence index} = \mathrm{mod}\left\{\begin{matrix} f(t, r_0, r_1, \ldots, r_K) + \mathrm{dec}(b_{M-3} b_{M-2} b_{M-1}) \\ + 8 * \mathrm{mod}\left(\sum_{i=0}^{K} r_i, 3\right) \end{matrix}, \quad 24\right\} \quad \ldots(9)$$

In Equation (9), $r_i$ is $dec(b_{3i}b_{3i+1}b_{3i+2})$, $t$ is a superframe index or a frame index, and $f(t, r_0, r_1, ..., r_K)$ is a function related to $t$ and $r_0, r_1 ..., r_K$. $f(t, r_0, r_1 ..., r_K)$ is a function that enables two MSs to reselect different sequences at a next time when they fail to gain access to the three-step signaling procedure and the five-step signaling procedure due to fact that they selected the same orthogonal sequence index. For example, $f(t, r_0, r_1, ..., r_K)$ can be expressed as $mod\{t * (2^{3K}r_0 + 2^{3K-3}r_1 + ... + 2^0 r_K), 24\}$ or $mod\{t * (r_0 + r_1 + .. + r_K), 24\}$. $f(t, r_0, r_1, ..., r_K)$ can be expressed in numerous ways to allow the different MSs to select different orthogonal sequence indices at every frame or superframe.

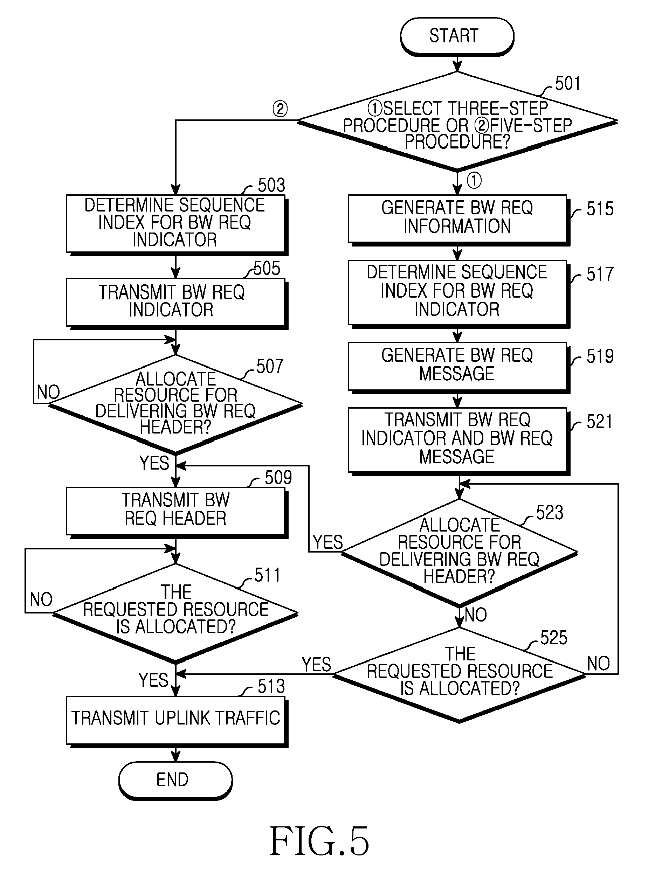

Referring now to FIG. 5, a diagram illustrates an MS and a BS in a wireless communication system, according to an embodiment of the present invention. Both an MS 502 and a BS 504 are illustrated, each of which include respective transmitters 506, 508, receivers 510, 512, and processors 514, 516.

As set forth above, the present invention provides a method for reducing the latency of the BW REQ signaling procedure from five steps to three steps in the OFDMA communication system. By virtue of the suggested orthogonal sequence index selection method of the BW REQ indicator, the influence of a decoding error of the BW REQ message or an error of the false alarm detection can be mitigated. Therefore, transmission and reception performance of the BW REQ channel can be enhanced and waste of the system capacity, which is caused by the error, can be avoided.

Hereafter, operations and structures of the MS for requesting the uplink BW and the BS for allocating the uplink BW as described above are elucidated by referring to the drawings.

FIG. 5 is a diagram illustrating the operation process of the MS in the broadband wireless communication system, according to an embodiment of the present invention.

Referring to FIG. 5, the MS determines whether to request the uplink BW according to the three-step BW REQ signaling procedure or the five-step BW REQ signaling procedure in step 501. The three-step or five-step selection can be determined by the type of the service requiring the uplink BW. For example, as for the delay sensitive service such as an RT service, the MS selects the three-step BW REQ signaling procedure. By contrast, for the non-delay sensitive service such as a BE service, the MS selects the five-step BW REQ signaling procedure.

When selecting the five-step BW REQ signaling procedure, the MS determines the sequence index for the BW REQ indicator in step 503. A plurality of orthogonal sequences is defined for various purposes, and some of them are allocated as orthogonal sequences for the BW REQ indicator. That is, the MS selects one sequence index from the orthogonal sequences for the BW REQ indicator.

In step 505, the MS transmits the orthogonal sequence of the selected index as the BW REQ indicator. The BW REQ indicator is transmitted over the BW REQ channel. For example, the BW REQ channel is illustarated in FIG. 4. When the BW REQ channel of FIG. 4 is given, the MS transmits the BW REQ indicator by mapping the BW REQ indicator to two subtiles in each tile. Namely, the BW REQ indicator includes 24 tones, which are transmitted overlappingly over three tiles.

In step 507, the MS checks whether a resource for carrying the BW REQ header is allocated in response to the BW REQ indicator. For example, based on Code Division Multiple Access (CDMA) allocation Information Element (IE) covered using the broadcast ID received from the BS, the MS determines whether the resource for carrying the BW REQ header is allocated.

When the resource for carrying the BW REQ header is allocated, the MS transmits the BW REQ header including at least one of ID information, flow ID information, and required resource size information of the MS in step 509.

In step 511, the MS examines whether the resource requested using the BW REQ header is allocated. The resource requested using the BW REQ header is allocated via an uplink MAP message. Accordingly, the MS determines whether the resource is allocated by decoding the MAP message received in every frame.

When the requested resource is allocated, the MS transmits uplink traffic over the allocated resource in step 513. In so doing, when requiring an additional uplink BW, the MS can include the piggyback BW REQ into the traffic using a bandwidth request extended header. More specifically, the MS encodes and modulates the traffic stored to the queue, maps the traffic to the allocated resource, constitutes OFDM symbols through Inverse Fast Fourier Transform (IFFT) operation and Cyclic Prefix (CP) insertion, up-converts the OFDM symbols to a Radio Frequency (RF) signal, and then transmits the RF signal.

When selecting the three-step BW REQ signaling procedure in step 501, the MS generates BW REQ information in step 515. The BW REQ information includes ID information and required BW information of the MS. For example, the ID information can include at least one of the MS-ID, the CID, and the SID, and the required BW information can include a pre-defined BW REQ size or QoS information relating to the BW size. For example, when the ID information is 12 bits and the required BW information is 4 bits, the BW REQ information can be 16 bits in size.

In step 517, the MS determines a sequence index for the BW REQ indicator. Unlike the step 503, the MS determines the sequence index using the BW REQ information according to a pre-defined mapping relation. The pre-defined mapping relation, which minimizes collisions between the sequence indices selected by MSs, can be defined as a function which uses a frame index and a superframe index in addition to the BW REQ information as its input variables. For example, the sequence index can be determined based on Equation (4), Equation (5), Equation (7), Equation (8), and Equation (10).

In step 519, the MS generates a BW REQ message using some bits of the BW REQ information. That is, rather than transmitting the whole BW REQ information as a message, only some bits are transmitted as the BW REQ message and the other bits not transmitted are estimated from the sequence index at the BS. The MS attaches CRC bits to the some bits, channel-codes the bits, and then modulates the bits. For example, the CRC bits can be 5 bits. In this case, a CRC polynomial can be x5+x4+x2+1. The channel coding can employ a Tail-Biting Convolutional Codes (TBCC) scheme, and the modulation can employ the QPSK scheme. In this case, when the BW REQ message includes 13 bits, it becomes 72 bits after the channel coding and becomes 36 symbols after the modulation.

In step 521, the MS transmits the BW REQ indicator and the BW REQ message. The MS transmits the orthogonal sequence of the determined index as the BW REQ indicator over the BW REQ channel. After encoding and modulating some bits of the BW REQ information, the MS transmits the BW REQ message over the BW REQ channel. For example, the BW REQ channel is illustrated in FIG. 4. When the BW REQ channel of FIG. 4 is given, the MS transmits the BW REQ indicator by mapping the BW REQ indicator to two subtiles of each tile. Next, the MS maps and transmits the BW REQ message to one subtile of each tile; that is, to three subtiles.

In step 523, the MS checks whether a resource for carrying the BW REQ header is allocated. For example, based on the CDMA allocation IE covered using the broadcast ID received from the BS, the MS determines whether the resource for carrying the BW REQ header is allocated. When the resource for carrying the BW REQ header is allocated, this implies that the BS fails to detect the BW REQ message and thus recognizes the BW REQ of the MS as the five-step procedure. In result, the MS proceeds to step 509 and follows the five-step BW REQ signaling procedure.

By contrast, when the resource for carrying the BW REQ header is not allocated, the MS examines whether the resource requested using the BW REQ information is allocated in step 525. The resource requested using the BW REQ header is allocated via an uplink MAP message. Accordingly, the MS determines whether the resource is allocated by decoding the MAP message received in every frame. When the requested resource is allocated, the MS transmits uplink traffic over the allocated resource in step 513. In so doing, when requiring an additional uplink BW, the MS can include the piggyback BW REQ into the traffic using the bandwidth request extended header.

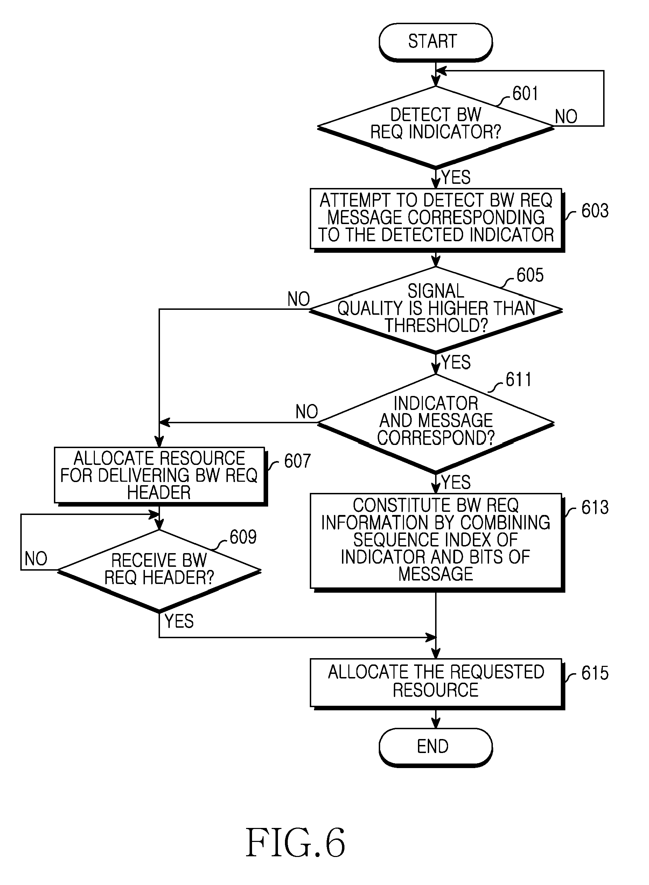

FIG. 6 is a diagram illustrating operations of the BS in the broadband wireless communication system, according to an embodiment of the present invention.

Referring now to FIG. 6, the BS checks whether the BW REQ indicator is detected in the BW REQ channel in step 601. In more detail, the BS can detect the BW REQ indicator constituted with a particular orthogonal sequence by correlating the signal sequence received over the BW REQ channel and the orthogonal sequences defined for the BW REQ indicator. For example, the BW REQ channel is illustrated in FIG. 4. When the BW REQ channel of FIG. 4 is given, the BW REQ indicator is received by mapping to two subtiles in each tile. In other words, the BW REQ indicator includes 24 tones and is received overlappingly over three tiles.

Upon detecting the BW REQ indicator, the BS attempts to detect the BW REQ message corresponding to the detected indicator in step 603. The BW REQ channel is divided into the first region for delivering the BW REQ indicator and the second region for delivering the BW REQ message. Hence, from the signal received in the second region, the BS attempts to detect the BW REQ message corresponding to the BW REQ indicator detected in the first region. That is, the BS obtains channel information of the MS which transmits the BW REQ indicator, from the detected BW REQ indicator, and attempts to detect the BW REQ message using the channel information.

In step 605, the BS determines whether the signal quality with respect to the second region is higher than a threshold. Namely, the BS determines whether the BW REQ message is transmitted and whether the BW REQ message, which is transmitted, can be successfully decoded. For example, the signal quality can be determined based on CRC, power measurement in the channel, LLR measurement, and channel quality measurement.

When the signal quality is lower than the threshold, the BS determines that the MS transmitting the detected BW REQ indicator follows the five-step procedure, and allocates a resource for carrying the BW REQ header in step 607. In so doing, the BS uses a message generated to be decodable by all the MSs. For example, the BS allocates the resource for delivering the BW REQ header through the CDMA allocation IE covered using the broadcast ID.

In step 609, the BS checks whether the BW REQ header is received. Herein, the BW REQ header includes at least one of the ID information, the flow ID information, and the required resource size information of the MS. Upon receiving the BW REQ header, the BS allocates the uplink resource requested using the BW REQ header in step 615.

When the signal quality is higher than the threshold in step 605, the BS determines that the MS transmitting the detected BW REQ indicator follows the three-step procedure, and determines whether the detected BW REQ indicator corresponds to the detected BW REQ message in step 611. The sequence index constituting the BW REQ indicator and the BW REQ message are generated from the BW REQ information, the BW REQ message is some bits of the BW information, and the sequence index is generated from the BW REQ information based on the pre-defined mapping relation. Thus, using the predefined mapping relation, the BS can determine whether the sequence index and the BW REQ message are generated from the same BW REQ information; that is, whether the detected BW REQ indicator corresponds to the detected BW REQ message. For example, the pre-defined mapping relation for determining the sequence index can be given by Equation 4, Equation 5, Equation 7, Equation 8, and Equation 10. When the detected BW REQ indicator and the detected BW REQ message do not correspond, the BS proceeds to step 607.

By contrast, when the detected BW REQ indicator and the detected BW REQ message correspond, the BS constructs the BW REQ information by combining the sequence index of the BW REQ indicator and a bit string of the BW REQ message in step 613. For example, the BS determines the bit string of the BW REQ message as some bits of the BW REQ information, and determines the other bits using the some bits and the sequence index. Thus, the BS confirms the ID information and the required BW information of the MS contained in the BW REQ information. For example, the ID information can include at least one of the MS-ID, the CID, and the SID. The BW information can be the pre-defined BW REQ size or the QoS information relating to the BW size. For example, when the ID information is 12 bits and the BW information includes 4 bits, the BW REQ information can be 16 bits in size.

In step 615, the BS allocates the uplink resource corresponding to the required BW confirmed from the BW REQ information. The uplink resource is allocated using the uplink MAP message.

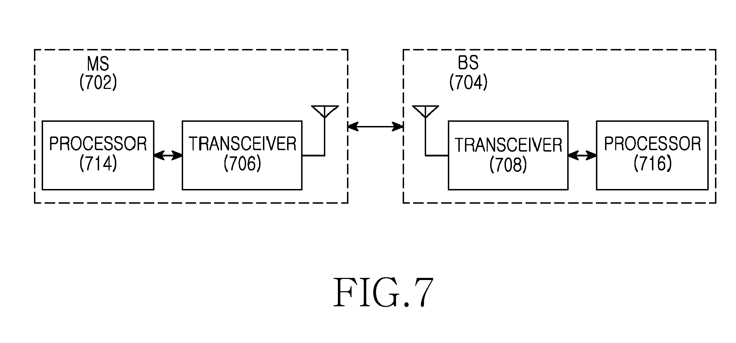

FIG. 7 is a block diagram of the MS and the BS in the broadband wireless communication system, according to an embodiment of the present invention.

As illustrated in FIG. 7, the MS 702 includes a transceiver 706 and a processor 714, and the BS 704 includes a transceiver 708 and a processor 716.

The transceiver 706 of the MS 702 transmits the bit string provided from the processor 714 over an antenna, converts a signal received via the antenna to a bit string, and outputs the bit string to the processor 714. More specifically, in the transmission, the transceiver 706 generates complex symbols by encoding and modulating the transmit bit string, maps the complex symbols to the subcarriers, constitutes OFDM symbols through the IFFT and the CP insertion, up-converts the baseband signal to an RF signal, and then transmits the RF signal over the antenna. In the reception, the transceiver 706 down-converts an RF signal received over the antenna to a baseband signal, divides the baseband signal into OFDM symbols, restores signals mapped to the subcarriers using FFT, and then restores the receive bit string by demodulating and decoding the signals. In particular, the transceiver 706 maps and transmits at least one of the BW REQ indicator and the BW REQ message provided from the processor 714 to the first region and the second region of the BW REQ channel respectively. For example, the structure of the BW REQ channel is illustrated in FIG. 4.

The processor 714 controls the functions of the MS 702. The processor 714 controls the function for requesting the uplink BW over the BW REQ channel. In more detail, the processor 714 determines which one of the three-step BW REQ signaling procedure and the five-step BW REQ signaling procedure is used to request the uplink BW, based on the type of the service requiring the uplink BW.

When selecting the five-step BW REQ signaling procedure, the processor 714 selects one sequence index of the orthogonal sequences for the BW REQ indicator, and transmits the orthogonal sequence of the selected index as the BW REQ indicator via the transceiver 706. Next, when the resource for delivering the BW REQ header is allocated, the processor 714 generates the BW REQ header including at least one of the ID information, the flow ID information, and the required resource size information of the MS and then transmits the generated BW REQ header via the transceiver 706.

Upon selecting the three-step BW REQ signaling procedure, the processor 714 generates the BW REQ information including the ID information and the required BW information of the MS, and generates the sequence index for the BW REQ indicator and the BW REQ message from the BW REQ information. The BW REQ message is some bits of the BW REQ information, and the sequence index is generated using the BW REQ information according to the pre-defined mapping relation. The pre-defined mapping relation, which minimizes collisions between the sequence indices selected by MSs, can be defined as the function which uses the frame index and the superframe index in addition to the BW REQ information as its input variables. For example, the sequence index can be determined based on Equation 4, Equation 5, Equation 7, Equation 8, and Equation 10. The processor 714 transmits the BW REQ indicator and the BW REQ message via the transceiver 706. As a result of the transmission of the BW REQ indicator and the BW REQ message, the resource corresponding to the required BW or the resource for delivering the BW REQ header can be allocated by the BS. When the resource corresponding to the required BW is allocated, which implies the success of the three-step BW REQ signaling procedure, the processor 714 transmits the uplink traffic. By contrast, when the resource for delivering the BW REQ header is allocated, which implies the failure of the three-step BW REQ signaling procedure, the processor 714 re-requests the BW using the BW REQ header.

The transceiver 708 of the BS 704 transmits the bit string provided from the processor 716 over an antenna, converts a signal received via the antenna to a bit string, and outputs the bit string to the processor 716. More specifically, in the transmission, the transceiver 708 generates complex symbols by encoding and modulating the transmit bit string, maps the complex symbols to the subcarriers, constitutes OFDM symbols through the IFFT and the CP insertion, up-converts the baseband signal to an RF signal, and then transmits the RF signal over the antenna. In the reception, the transceiver 708 down-converts an RF signal received via the antenna to a baseband signal, divides the baseband signal into OFDM symbols, restores signals mapped to the subcarriers using the FFT, and then restores the receive bit string by demodulating and decoding the signals. In particular, the transceiver 708 provides the processor 716 with at least one of the BW REQ indicator and the BW REQ message received over the BW REQ channel. For example, the structure of the BW REQ channel is illustrated in FIG. 4.

The processor 716 controls the functions of the BS 704. The processor 716 recognizes and processes the BW REQ of the MS using the BW REQ indicator and the BW REQ message received in the BW REQ channel. In further detail, the processor 716 attempts to detect the BW REQ indicator in the first region of the BW REQ channel and to detect the BW REQ message corresponding to the detected BW REQ indicator in the second region of the BW REQ channel. When the signal quality for the second region is lower than a threshold, the processor 716 processes the BW REQ of the MS according to the five-step BW REQ signaling procedure. When the signal quality for the second region is higher than the threshold, the processor 716 processes the BW REQ of the MS according to the three-step BW REQ signaling procedure. According to the five-step BW REQ signaling procedure, the processor 716 allocates the resource for delivering the BW REQ header, and upon receiving the BW REQ header, allocates the uplink resource corresponding to the BW as requested by the BW REQ header. According to the three-step BW REQ signaling procedure, the processor 716 constitutes the BW REQ information using the sequence index of the detected BW REQ indicator and the bit string of the detected BW REQ message, and allocates the uplink resource corresponding to the required BW contained in the BW REQ information.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will also be appreciate that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain embodiments thereof, it will be understood by those skilled in the art that various changes in form and detail may be made therein without departing from the scope of the invention as defined by the appended claims and their equivalents.

## Claims

1. A method for requesting uplink Bandwidth (BW) over a BW Request (REQ) channel in an Orthogonal Frequency Division Multiple Access (OFDMA) communication system, the method comprising:

   generating BW REQ information having at least one of a Mobile Station-Identifier (MS-ID) and a requested uplink resource information;
   transmitting a BW REQ indicator with a BW REQ message over the BW REQ channel to a Base Station (BS) to request an uplink resource for uplink traffic of a delay sensitive service, wherein the BW REQ indicator and the BW REQ message are derived from the BW REQ information ;
   receiving a grant of the requested uplink resource from the BS in accordance with the transmitted BW REQ indicator and the BW REQ message; and
   transmitting the uplink traffic to the BS using the granted uplink resource.

2. A method for allocating uplink Bandwidth (BW) over a BW Request (REQ) channel in an Orthogonal Frequency Division Multiple Access (OFDMA) communication system, the method comprising:

   determining whether a BW REQ indicator is received from a Mobile Station (MS) over the BW REQ channel;
   determining whether a BW REQ message corresponding the BW REQ indicator is received from the MS over the BW REQ channel;
   generating a BW REQ information having at least one of a Mobile Station-Identifier (MS-ID) and a requested uplink resource information by using the BW REQ indicator and the BW REQ message;
   allocating the requested uplink resource in accordance with the received BW REQ indicator and the BW REQ message; and
   receiving the uplink traffic from the MS using the allocated uplink resource.

3. Apparatus for requesting uplink Bandwidth (BW) over a BW Request (REQ) channel in an Orthogonal Frequency Division Multiple Access (OFDMA) communication system, the apparatus comprising:

   a processor for generating BW REQ information having at least one of a Mobile Station-Identifier (MS-ID) and a requested uplink resource information; and
   a transceiver for transmitting a BW REQ indicator with a BW REQ message over the BW REQ channel to a Base Station (BS) to request an uplink resource for uplink traffic of a delay sensitive service, wherein the BW REQ indicator and the BW REQ message are derived from the BW REQ information, for receiving a grant of the requested uplink resource from the BS in accordance with the transmitted BW REQ indicator and the BW REQ message, and for transmitting the uplink traffic to the BS using the granted uplink resource.

4. Apparatus for allocating uplink Bandwidth (BW) over a BW Request (REQ) channel in an Orthogonal Frequency Division Multiple Access (OFDMA) communication system, the apparatus comprising:

   a processor for determining whether a BW REQ indicator is received from a Mobile Station (MS) over the BW REQ channel, for determining whether a BW REQ message corresponding the BW REQ indicator is received from the MS over the BW REQ channel, for generating a BW REQ information having at least one of a Mobile Station-Identifier (MS-ID) and a requested uplink resource information by using the BW REQ indicator and the BW REQ message, and for allocating the requested uplink resource in accordance with the received BW REQ indicator and the BW REQ message; and
   a transceiver for receiving the uplink traffic from the MS using the allocated uplink resource.

5. A method or apparatus in accordance with any preceding claim, wherein the requested uplink resource information comprises one of a pre-defined BW REQ size and a Quality of Service (QoS) identifier.

6. A method or apparatus in accordance with any preceding claim, wherein the BW REQ indicator is selected from one of a plurality of BW ranging codes, and
   wherein the BW REQ message comprises all or a part ofBW REQ information.

7. A method or apparatus in accordance with any preceding claim, wherein the BW REQ channel is divided into a first region for the BW REQ indicator and a second region for the BW REQ message, wherein the BW REQ channel comprises three (3) BW REQ tiles, wherein each tile comprises three (3) subtiles, and each subtile comprises two (2) adjacent subcarriers having six (6) symbols each, and
wherein end subtiles of each tile define the BW REQ indicator, and a middle subtile of each tile defines the BW REQ message.

**8.** A method or apparatus in accordance with Claim 7, wherein a part of bits of the BW REQ information are carried by the BW REQ message and an orthogonal sequence index of the BW REQ indicator is selected in accordance with a mapping relation defined by at least the remaining bits of the BW REQ information.

**9.** A method or apparatus in accordance with Claim 8, wherein the mapping relation between the BW REQ message and the BW REQ indicator is defined as a function that uses at least one of a super-frame index, a frame index and bits of the BW REQ information as input parameters.

**10.** A method or apparatus in accordance with Claim 8 or Claim 9, wherein the mapping relation is defined as:

$$\text{Orthogonal sequence index} = \mathrm{mod}\left\{\begin{matrix} f(t, b_0, b_1, \ldots, b_{M-1}) + \mathrm{dec}(b_{M-3}b_{M-2}b_{M-1}) \\ + 8 * \mathrm{mod}\left(\sum_{i=0}^{K} r_i, 3\right) \end{matrix}, \quad 24\right\}$$

where orthogonal sequence index is an orthogonal sequence index for the BW REQ indicator, dec( ) is a function converting binary number into decimal number, $b_k$ is *k*th bit of BW REQ information, mod(A, B) is modulo operator, $r_i$ is $dec(b_{3i}b_{3i}+_1b_{3i}+_2)$, $t$ is a superframe index or a frame index, and $f(t, b_0, b_1, \ldots, b_{M-1})$ is function related to $t$ and $b_0, b_1, \ldots, b_{M-1}$, K is a constant number as one integer from 0 to 4.

**11.** A method or apparatus in accordance with Claim 10, wherein $f(t, b_0, b_1, \ldots, b_{M-1})$ is defined as:

$$f(t, b_0, b_1, \ldots, b_{M-1}) = t * \lfloor dec(b_0b_1b_2 \ldots b_{L-1}) / 24 \rfloor,$$

where t is a super-frame index or a frame index, $b_k$ is *k*th bit of BW REQ information, L is less than or equal to variable M (L≤ M).

**12.** A method or apparatus in accordance with Claim 2 or Claim 4, or in accordance with any one of Claims 5 to 11 as dependent upon Claim 2 or Claim 4, wherein determining whether the BW REQ message corresponding the BW REQ indicator is received comprises,
determining whether the sequence index and the BW REQ message is generated based on an identical BW REQ information by inversely using the mapping relation.

**13.** A method or apparatus in accordance with Claim 12, wherein determining whether the BW REQ message corresponding the BW REQ indicator is received comprises,
determining whether a signal quality of a second region for the BW REQ message is equal to or greater than a threshold.

**14.** A method or apparatus in accordance with Claim 13, wherein the signal quality is determined based on at least one of Cyclic Redundancy Check (CRC), power measurement in the channel, Log Likelihood Ratio (LLR) measurement, and channel quality measurement.

**15.** A computer program comprising instructions arranged, when executed, to implement a method as claimed in any preceding claim.

Base station
Mobile station
BW request ranging code
102
UL grant for BW r equest message
104
BW request header
(carrying BW request message )
106
UL grant
108
UL scheduled transmission
with optional piggybacked BW request
110

FIG.1

Base station
Mobile station
BW request message
202
UL grant
204
UL scheduled transmission
with optional piggybacked BW request
206

FIG.2

BW request indicator
(+ optional BW request message )
302
UL grant for BW r equest message
304
Base station
Mobile station
BW request header
(carrying BW request message )
306
UL grant
308
UL scheduled transmission
with optional piggybacked BW request
310

FIG.3

time
(symbol)
frequency
(subcarrier)
Pr0 Pr4 Pr8 Pr12 Pr16 Pr20
Pr1 Pr5 Pr9 Pr13 Pr17 Pr21
M0 M6 M12 M18 M24 M30
M1 M7 M13 M19 M25 M31
Pr2 Pr6 Pr10 Pr14 Pr18 Pr22
Pr3 Pr7 Pr11 Pr15 Pr19 Pr23
M2 M8 M14 M20 M26 M32
M3 M9 M15 M21 M27 M33
M4 M10 M16 M22 M28 M34
M5 M11 M17 M23 M29 M35
BW REQ
indicator part
BW REQ
message part

FIG.4

START
501
①SELECT THREE-STEP PROCEDURE OR ②FIVE-STEP PROCEDURE?
②
①
503
DETERMINE SEQUENCE INDEX FOR BW REQ INDICATOR
505
TRANSMIT BW REQ INDICATOR
507
ALLOCATE RESOURCE FOR DELIVERING BW REQ HEADER?
NO
YES
509
TRANSMIT BW REQ HEADER
511
THE REQUESTED RESOURCE IS ALLOCATED?
NO
YES
513
TRANSMIT UPLINK TRAFFIC
END
515
GENERATE BW REQ INFORMATION
517
DETERMINE SEQUENCE INDEX FOR BW REQ INDICATOR
519
GENERATE BW REQ MESSAGE
521
TRANSMIT BW REQ INDICATOR AND BW REQ MESSAGE
523
ALLOCATE RESOURCE FOR DELIVERING BW REQ HEADER?
YES
NO
525
THE REQUESTED RESOURCE IS ALLOCATED?
YES
NO

FIG.5

START
DETECT BW REQ INDICATOR?
601
NO
YES
ATTEMPT TO DETECT BW REQ MESSAGE CORRESPONDING TO THE DETECTED INDICATOR
603
SIGNAL QUALITY IS HIGHER THAN THRESHOLD?
605
NO
YES
INDICATOR AND MESSAGE CORRESPOND?
611
NO
YES
ALLOCATE RESOURCE FOR DELIVERING BW REQ HEADER
607
RECEIVE BW REQ HEADER?
609
NO
YES
CONSTITUTE BW REQ INFORMATION BY COMBINING SEQUENCE INDEX OF INDICATOR AND BITS OF MESSAGE
613
ALLOCATE THE REQUESTED RESOURCE
615
END

FIG.6

BS
(704)
PROCESSOR
(716)
TRANSCEIVER
(708)
MS
(702)
TRANSCEIVER
(706)
PROCESSOR
(714)

FIG.7

Europäisches Patentamt
European Patent Office
Office européen des brevets

# EUROPEAN SEARCH REPORT

Application Number
EP 10 16 6353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/082908 A1 (INTEL CORP [US]; VENKATACHALAM MUTHAIAH [US]; YANG XIANGYING [US]; AHM) 10 July 2008 (2008-07-10) * abstract * * paragraphs [0005], [0012] - [0015], [0017], [0019] - [0035], [0040] - [0047], [0055] - [0057] * | 1-15 | INV. H04W72/04 |
| X | WO 2007/149729 A1 (INTEL CORP [US]; DEMIRHAN MUSTAFA [US]; KOC ALI [US]; SHRIVASTAVA SHWE) 27 December 2007 (2007-12-27) * abstract * * paragraphs [0011] - [0019], [0033] - [0037], [0040], [0045] - [0050]; figures 4a,4b * | 1-15 | |
| A | US 2008/232330 A1 (LEE NAM SUK [KR] ET AL) 25 September 2008 (2008-09-25) * abstract * * paragraphs [0043] - [0049], [0055] - [0062], [0072]; figures 3,4 * | 1-15 | TECHNICAL FIELDS SEARCHED (IPC) H04W |
| A | WO 2009/054598 A1 (KOREA ELECTRONICS TELECOMM [KR]; SAMSUNG ELECTRONICS CO LTD [KR]; KIM) 30 April 2009 (2009-04-30) * abstract * * figures 3-6 * | 1-15 | |

The present search report has been drawn up for all claims

| Place of search | Date of completion of the search | Examiner |
|---|---|---|
| Munich | 19 October 2010 | Delucchi, Cecilia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2
EPO FORM 1503 03.82 (P04C01)

# ANNEX TO THE EUROPEAN SEARCH REPORT ON EUROPEAN PATENT APPLICATION NO. EP 10 16 6353

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2010

| Patent document cited in search report | Publication date | Patent family member(s) | Publication date |
|---|---|---|---|
| WO 2008082908 A1 | 10-07-2008 | CN 101569115 A | 28-10-2009 |
| | | EP 2127150 A1 | 02-12-2009 |
| | | JP 2010515374 T | 06-05-2010 |
| | | US 2008159334 A1 | 03-07-2008 |
| WO 2007149729 A1 | 27-12-2007 | CN 101473564 A | 01-07-2009 |
| | | EP 2030344 A1 | 04-03-2009 |
| | | US 2007291719 A1 | 20-12-2007 |
| US 2008232330 A1 | 25-09-2008 | KR 20070036004 A | 02-04-2007 |
| WO 2009054598 A1 | 30-04-2009 | EP 2210385 A1 | 28-07-2010 |
| | | KR 20090042508 A | 30-04-2009 |
| | | US 2010254468 A1 | 07-10-2010 |

EPO FORM P0459

For more details about this annex : see Official Journal of the European Patent Office, No. 12/82